Europäisches Patentamt

(19) European Patent Office

Office européen des brevets

(11) EP 0 795 448 A2

(12) **EUROPEAN PATENT APPLICATION**

(43) Date of publication:
17.09.1997 Bulletin 1997/38

(51) Int. Cl.6: **B60T 8/00**

(21) Application number: 97104088.6

(22) Date of filing: 11.03.1997

(84) Designated Contracting States:
DE FR GB

(30) Priority: 12.03.1996 JP 54490/96
12.03.1996 JP 54491/96

(71) Applicant: UNISIA JECS CORPORATION
Atsugi-shi, Kanagawa 243 (JP)

(72) Inventor: Yamaura, Tamotsu
Atsugi-shi, Kanagawa 243 (JP)

(74) Representative: Grünecker, Kinkeldey,
Stockmair & Schwanhäusser
Anwaltssozietät
Maximilianstrasse 58
80538 München (DE)

(54) **Road surface condition detection system for automotive vehicles**

(57) A road surface condition detection system for an automotive vehicle comprises a wheel speed sensor for detecting a wheel speed of at least one road wheel to generate a wheel speed signal, and a control unit electrically connected to the wheel speed sensor for integrating an absolute value of components, being included in the wheel speed signal and representative of fluctuations in the state of the vehicle, for a predetermined period of time to produce an integrated value (Sa). The control unit determines that a road surface condition is rough when the integrated value is above a predetermined threshold value ($\gamma$) and for determining that the road surface condition is good when the integrated value is below the predetermined threshold value ($\gamma$).

**FIG.4**

EP 0 795 448 A2

## Description

### BACKGROUND OF THE INVENTION

#### Field of the Invention

The present invention relates to a road surface condition detection system for automotive vehicles, and specifically to an automotive road surface condition detection system which utilizes the sensor signal from a wheel-speed sensor, being located at a road wheel of the vehicle, to determine whether a road surface is a rough road or a good road.

#### Description of the Prior Art

On more later-model cars with an anti-lock brake system, a traction control system and/or a damping force control system for an automotive suspension system with a variable damping-force shock absorber, a road surface condition detection system is often used for properly varying the control characteristics of the anti-skid control functions, traction control functions, and/or damping-force control functions, depending on road surface conditions such as bad or good roads. One such road surface condition detection system has been proposed and disclosed in Japanese Patent Provisional Publication No. 3-273967. In the Japanese Patent Provisional Publication No. 3-273967, first a detection system detects or monitors an acceleration of a road wheel. Second, the system counts how many times the detected acceleration exceeds a predetermined threshold $\alpha$ (an upper limiting value) for a predetermined time interval, and then outputs a "count" value. Then, the "count" value is compared with a predetermined threshold $\beta$. The system determines that the road surface is a bad road if the "count" value is greater than the threshold value $\beta$. Additionally, the system varies the predetermined threshold $\alpha$ depending on during braking or during non-braking in such a manner as to set the threshold value $\alpha$ at a greater value if the brakes are applied.

However, the prior art system disclosed in the Japanese Patent Provisional Publication No. 3-273967 requires above-mentioned two threshold values $\alpha$ and $\beta$ to determine whether the road surface is a bad road or a good road. These predetermined threshold values $\alpha$ and $\beta$ must be selected properly by way of simulation experiments being repeatedly performed over a long time duration, and then the propriety of the two threshold values $\alpha$ and $\beta$ selected must be further tested thoroughly by way of repetitions of actual road tests while using a motor car employing a prototype road surface condition detection system. Such a long experiment in determining these two threshold values $\alpha$ and $\beta$, is very troublesome. Also, the conventional system requires at least two comparison tests or comparison operations for comparing the detected acceleration of the road wheel with the first threshold $\alpha$ and for comparing the previously-discussed "count" value with the second threshold $\beta$. On this type of conventional system, it is difficult to quickly determine for a brief moment (in a short travel distance) as to whether the road surface condition is rough or good. In other words, the prior art system requires a comparatively long travel distance adequate to discrimination or determination of the road surface condition. Therefore, the conventional system cannot make a precise discrimination or determination on the road surface condition during traveling on such roads as a rough road surface and a good road surface alternate with each other at short intervals.

### SUMMARY OF THE INVENTION

Accordingly, it is an object of the invention to provide a road surface condition detection system for automotive vehicles which avoids the aforementioned disadvantages of the prior art.

It is another object of the invention to provide an automotive road surface condition detection system, which is capable of discriminating or determining a road surface condition for a comparatively short period of time, and of simplifying a control program and of reducing the number of simulation experiments and actual road tests, by reducing the number of comparison operations and the number of a given threshold necessary for the comparison operation.

In order to accomplish the aforementioned and other objects of the present invention, a road surface condition detection system for an automotive vehicle comprises a wheel-speed detection means provided for detecting a wheel speed of at least one of a plurality of road wheels to generate a wheel speed signal, an integration means electrically connected to the wheel-speed detection means for integrating an absolute value of components, being included in the wheel speed signal from the wheel-speed detection means and representative of fluctuations in a state of the vehicle, for a predetermined period of time, to produce an integrated value $(Sa)$, and a road condition discrimination means electrically connected to the integration means for determining that a road surface condition is a bad road when the integrated value is above a predetermined threshold value $(\gamma)$ and for determining that the road surface condition is a good road when the integrated value is below the predetermined threshold value $(\gamma)$.

The integration means may compute the integrated value $(Sa)$ by integrating an amplitude of resonance-frequency components of vertical oscillation of an unsprung mass of the vehicle for the predetermined period of time, the resonance-frequency components being included in the wheel speed signal. The road surface condition detection system may further comprise a band-pass filter connected between the wheel-speed detection means and the integration means for extracting specified frequency components included in the wheel speed signal within a definite band, while attenuating all other frequency components, and for transmitting an output signal of the specified frequency components to the integration means.

A road surface condition detection system may further comprise a rate-of-change detection means electrically connected to the wheel-speed detection means for detecting a rate of change in the wheel speed signal, and wherein the integration means may compute the integrated value (Sa) by integrating an absolute value of the rate of change in the wheel speed signal for the predetermined period of time. A road surface condition detection system may further comprise a low-pass filter connected between the rate-of-change detection means and the integration means for transmit specified frequency components below a given cut-off frequency, while attenuating all other frequency components higher than resonance-frequency components of vertical oscillation of an unsprung mass of the vehicle, and for transmitting an output signal of the specified frequency components to the integration means.

It is preferable that the predetermined period of time is set at a time interval equivalent to one complete revolution of the road wheel.

## BRIEF DESCRIPTION OF THE DRAWINGS

Fig. 1 is a conceptual diagram explaining one exemplified road surface condition detection system of the invention.

Fig. 2 is a schematic block diagram illustrating one example of application of a control unit incorporated in the system shown in Fig. 1 to a control system such as a skid control system, a traction control system or a damping force control system.

Fig. 3 is a block diagram illustrating components of the control unit shown in Fig. 2.

Fig. 4 is a flow chart illustrating an arithmetic processing (a series of procedures) which is performed by the control unit shown in Fig. 2.

Fig. 5 is a graph illustrating output data (related to the system of Fig. 1) representative of integration signal values Sa being plotted every 360 degrees (one complete revolution) of the road wheel with a wheel-speed sensor during traveling on bad roads.

Fig. 6 is a graph illustrating output data (related to the system of Fig. 1) representative of integration signal values Sa being plotted every 360 degrees of the road wheel.

Fig. 7 is another conceptual diagram explaining a road surface condition detection system of the invention.

Fig. 8 is a schematic block diagram illustrating one example of application of a control unit incorporated in the system shown in Fig. 7 to a control system such as a skid control system, a traction control system or a damping force control system.

Fig. 9 is a block diagram illustrating components of the control unit shown in Fig. 8.

Fig. 10 is a flow chart illustrating an arithmetic processing (a series of procedures) which is performed by the control unit shown in Fig. 8.

Fig. 11 is a graph illustrating output data (related to the system of Fig. 7) representative of integration signal values Sa being plotted every 360 degrees of the road wheel with a wheel-speed sensor during traveling on bad roads.

Fig. 12 is a graph illustrating output data (related to the system of Fig. 7) representative of integration signal values Sa being plotted every 360 degrees of the road wheel with a wheel-speed sensor during traveling on good roads.

Fig. 13 is a graph illustrating output data (related to the system of Fig. 7) representative of integration signal values Sa being plotted every 36 degrees (1/10 revolution) of the road wheel with a wheel-speed sensor during traveling on bad roads.

Fig. 14 is a graph illustrating output data (related to the system of Fig. 7) representative of integration signal values Sa being plotted every 36 degrees of the road wheel with a wheel-speed sensor during traveling on good roads.

Fig. 15 is a modification of the routine shown in Fig. 10.

## DESCRIPTION OF THE PREFERRED EMBODIMENTS

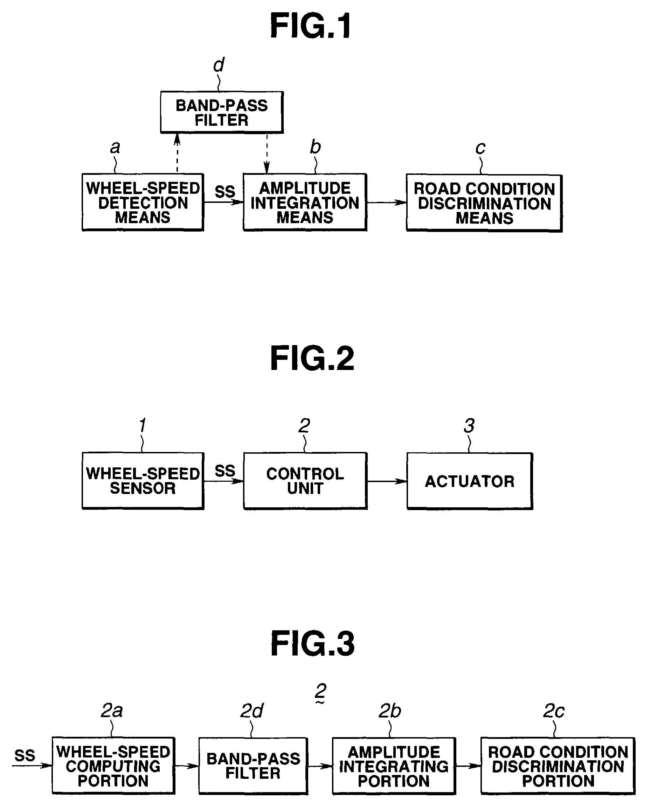

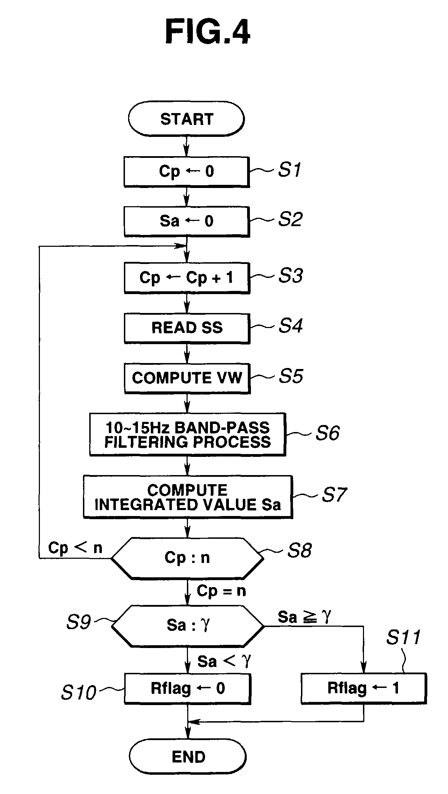

Referring now to the drawings, particularly to Fig. 2, the road surface condition detection system of the invention includes a wheel speed sensor 1 and a control unit 2. The wheel speed sensor 1 consists of a typical magnetic pickup type wheel speed sensor consisting of a toothed sensor rotor located in place at the associated road wheel, and a sensor unit composed of a pickup coil, a magnet located within the coil and a soft iron bar. In case that the magnetic pickup type wheel speed sensor is located at a front road wheel of the vehicle, the sensor rotor is coaxially attached to the front wheel hub, whereas the sensor unit is attached to the knuckle arm (the front suspension part), for example. In case that the wheel speed sensor is located at a rear road wheel, the sensor rotor is coaxially attached to the rear axle driveshaft, whereas the sensor unit is attached to the rear wheel bearing case, for example. As the road wheel rotates, the toothed sensor rotor produces changes in magnetic flux, and thus the sensor unit generates a pulsing voltage signal, simply a pulse signal (denoted by SS). Although it is not clearly shown, as is generally known, the control unit 2 is typically comprised of an input interface circuit provided for receiving the pulse signal SS from the wheel speed sensor 1, a processor provided for performing an arithmetic processing as shown in Fig. 4, a memory usually composed of a read only memory (ROM) and a random access memory (RAM) for temporarily storing results of the arithmetic processing and for storing a predetermined threshold value denoted by $\gamma$ (gamma) for a designated comparison operation, and an output interface circuit provided for outputting a command signal based on the results of the arithmetic processing in the processor to the associated actuator 3. In a conventional manner, the processor and the memory are mutually connected to each other for automatic transmission and reception of information. For instance, the previously-noted actuator 3 corresponds to a solenoid of an electromagnetic solenoid valve through which a master-cylinder pressure is fed into a wheel-brake cylinder or brake fluid in the wheel-brake cylinder is returned via a return pump to a main brake line on brake-control type anti-lock brake systems. On brake-control type traction control systems, the actuator 3 corresponds to an electromagnetic solenoid of an electromagnetic solenoid type spool valve through which a pressurized brake fluid is forcibly fed into a wheel-brake cylinder by way of an auxiliary pump to prevent excessive torque delivery to drive wheels. The actuator 3 may comprise a rotary solenoid or an electric motor incorporated in a variable damping-force shock absorber for properly varying damping-force characteristics on contraction or expansion strokes. Alternatively, in case of engine-power control type traction control systems, the actuator 3 may comprise an throttle-valve actuator for suitably adjusting the throttle opening or an injection-valve actuator for suitably adjusting the injection-valve opening. The processor of the control unit computes or calculates a wheel speed on the basis of the pulse signal SS from the wheel speed sensor 1 and at the same time determines the road surface condition on the basis of specified frequency components included in the pulse signal SS, as hereinafter described in detail. The operational characteristics of the actuator 3 are properly varied depending upon the road surface condition discriminated or determined by the processor of the control unit 2, in order to provide a more proper skid control, traction control and/or damping force control. For the purpose of determining a road surface condition, as shown in Fig. 3, the control unit 2 (precisely the processor) comprises a wheel-speed computing portion 2a, a band-pass filter 2d, an amplitude integrating portion 2b, and a road surface condition discrimination portion 2c. In the shown embodiment, the input interface circuit of the control unit 2 is electrically connected to a wheel speed sensor located at either one of the four road wheels of the vehicle to receive the wheel-speed indicative pulse signal therefrom. Alternatively, the input interface circuit of the control unit 2 may be connected to a plurality of wheel speed sensors respectively located at four road wheels, for receiving four wheel-speed indicative pulse signals from them. In this case, the system may more accurately determine the road surface condition on the basis of specified frequency components (as will be fully described later) included in the four pulse signals SS from the four sensors.

The routine (arithmetic processing for determination of a road surface condition), being executed by the processor of the control unit 2 of Fig. 3, is described in detail in accordance with the flow chart shown in Fig. 4.

Step S1 is a so-called initialization step in which a "count" value Cp is cleared to zero. The "count" value Cp is a value which is obtained by counting up a number of pulses of the pulsing voltage signal (the pulse signal) SS from the wheel speed sensor 1. Step S2 is an initialization step for an integrated value Sa, in which the integrated value Sa is reset at "0". Then, step S3 proceeds in which the count-up operation is triggered in synchronization with the leading edge of each pulse of the pulses of the pulse signal SS, being generated from the wheel speed sensor 1 and input into the input interface circuit of the control unit 2 during the current routine. That is, the "count" value Cp is incremented by "1" at step S3 in response to each pulse output from the wheel speed sensor during the routine. Such a count-up operation is achieved by way of a conventional pulse counter employed in the wheel-speed computing portion 2a.

In step S4, read in the pulse signal SS from the wheel speed sensor 1. That is, the pulse currently output from the wheel speed sensor is input into the processor of the control unit 2 for the purpose of a programmed computing operation including a filtering process and a comparison operation and a calculation of a wheel speed. In step S5, a time interval from the previous pulse output to the current pulse output (precisely a time interval between a leading edge of the previous one pulse and a leading edge of the current one pulse) is computed, and then a wheel speed VW is calculated on the basis of the time interval computed. As may be appreciated, the shorter the time interval computed, the greater the wheel speed VW. That is, the wheel speed VW is in inverse-proportional to the time interval between the two adjacent pulses. In step S6, a specified filtering process is made to the current one pulse read through step S4 by means of a band-pass filter 2d, so as to extract or pass resonance-frequency components of vertical oscillation of the unsprung mass of the vehicle within a definite band of 10 to 15 Hz. In step S7, firstly calculated is the amplitude (the maximum absolute value) of the resonance-frequency components passed through the band-pass filter 2d. Secondly, the integrated value Sa is updated by a new integrated value which is obtained by adding the current amplitude to the previous integrated value stored in the predetermined memory address of the memory included in the control unit 2. The integration function is performed by means of the amplitude integrating portion 2b included in the control unit 2. In step S8, the "count" value Cp is compared with a predetermined number n. In the shown embodiment, the predetermined number n is set at a number of the pulses corresponding to one complete revolution (360 degrees) of the road wheel being equipped with the wheel speed sensor 1. For example, assuming that the sensor rotor has 110 teeth, the predetermined number n is preset at "110". When the "count" value Cp is less than the predetermined number n, the procedure returns from step S8 to step S3 so as to continue the integration operation. When the predetermined number n is achieved, step S9 enter in which the integrated value Sa is compared with a predetermined threshold value $\gamma$. When step S9 determines that the integrated value Sa is less than the threshold value $\gamma$, step S10 proceeds in which a flag Rflag is reset to "0". In contrast, when step S9 determines that the integrated value Sa is above the threshold $\gamma$, step S11 proceeds in which the flag Rflag is set at "1". Rflag = 1 signals that the current road surface condition is bad, whereas Rflag = 0 signals that the current road surface condition is good. Thus, the flag Rflag will be hereinbelow referred to as a "road condition indicative flag".

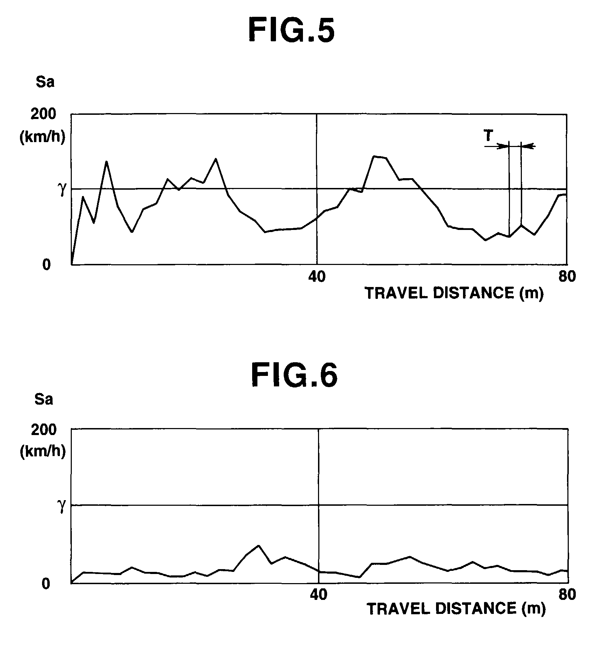

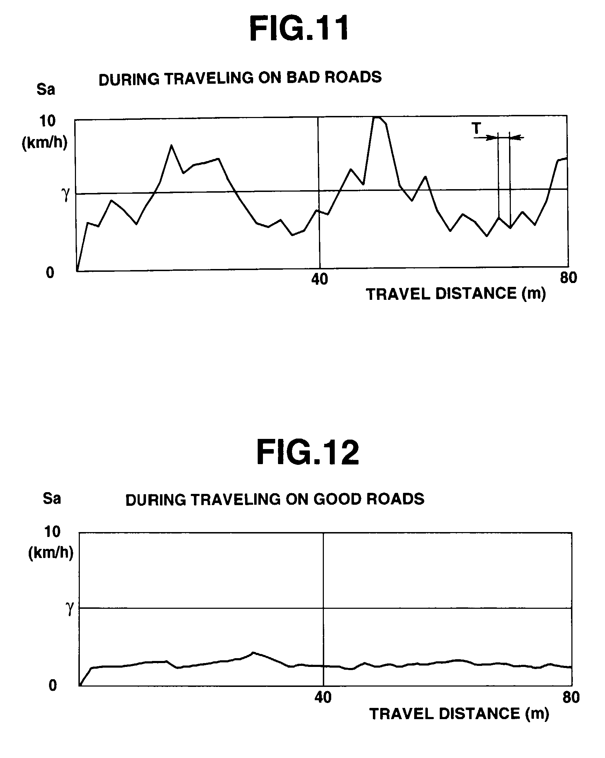

Referring now to Figs. 5 and 6, there are shown test results of actual road tests which were experimentally assured by the inventor of the present invention, using a motor vehicle equipped with the road surface condition detection system of the embodiment shown in Figs. 2, 3 and 4. Fig. 5 shows the output data of the integrated values (or the integration signal values) Sa being plotted every one complete revolution of the road wheel with the sensor 1 during traveling on bad roads, in the form of a polygonal-line graph which is obtained by connecting two adjacent plots (two adjacent integration signal values) to each other. On the other hand, Fig. 6 shows the output data of the integrated values Sa being plotted every one complete revolution of the road wheel with the sensor 1 during traveling on good roads. In comparison with variations in the integrated values Sa shown in Fig. 6 (during traveling on good roads), the integrated values Sa shown in Fig. 5 (during traveling on bad roads) greatly fluctuate and the variations in the integrated values Sa of Fig. 5 are relatively great so that some of the integrated values Sa are above the threshold $\gamma$. In contrast, during traveling on good roads (see Fig. 6), the integrated values Sa are comparatively stable and the variations in the integrated values Sa of Fig. 6 are small so that all of the integrated values Sa are less than the threshold $\gamma$. In Figs. 5 and 11, T denotes a travel distance (e.g., 2 m) corresponding to one complete revolution (360 degrees) of the road wheel.

With the previously-noted arrangement, the road surface condition detection system of the embodiment operates as follows.

During traveling on good roads, there is less wheel slip at each road wheel, and thus the amplitudes (the maximum absolute value) of the resonance-frequency components of vertical oscillation of the unsprung mass of the vehicle become small and also the integrated value Sa of the amplitudes is maintained below the threshold $\gamma$ during driving on good roads, as seen in Fig. 6. As a result of this, the processor of the control unit 2 determines through the flow from step S8 via step S9 to step S10 that the road surface condition is good. During traveling on bad roads, the vehicle may experience a great wheel slip at each road wheel, and thus the amplitudes (the maximum absolute value) of the resonance-frequency components of vertical oscillation of the unsprung mass of the vehicle become great and therefore the integrated value Sa of the amplitudes may exceed the threshold $\gamma$ during driving on bad roads, as seen in Fig. 5. Thus, the processor of the control unit 2 determines through the flow from step S8 via step S9 to step S11 that the road surface condition is bad. As discussed above, the system of the embodiment shown in Figs. 2 and 3 utilizes the amplitude of the resonance-frequency components of vertical oscillation of the unsprung mass of the vehicle, which frequency components are included in the pulse signal SS from the wheel speed sensor 1, as a vehicle-behavior factor or a vehicle-behavior component being correlative with the road surface condition. This is because the amplitude of the resonance frequency components reflects the vehicle behavior such as wheel slip. Additionally, the system can determine the road surface condition by way of only one comparison operation of the integrated value Sa of the amplitude (the maximum absolute value) of the resonance-frequency components of vertical oscillation of the unsprung mass with the predetermined threshold $\gamma$. The system of the embodiment as shown in Figs. 2 to 4 provides the following effects.

The system of the embodiment merely requires setting of only one threshold value $\gamma$ for the purpose of determination of a road surface condition. Only one threshold value $\gamma$ facilitates work load of a simulation and an actual road test necessary for determination of the threshold $\gamma$. Also, only one comparison operation as described previously simplifies the control program itself. In comparison with at least two comparison operations hitherto performed, the previously-discussed one comparison operation effectively minimizes a time necessary to determine the road surface condition. In the shown embodiment, since a determination or a discrimination for a road surface condition is made every one complete revolution of the road wheel, a responsiveness of determination of the road surface condition can be remarkably enhanced, as compared with the conventional system. Of frequency components included in the pulse signal SS from the wheel speed sensor 1, only the resonance-frequency components within a desired frequency band of 10 to 15 Hz are efficiently extracted or transmitted by means of the band-pass filter 2d. The band-pass filter eliminates the need for a complicated filtering device that a low-pass filter and a high-pass filter are combined with each other. Also, the band-pass filter serves as a noise attenuator which functions to attenuate several noises, such as high-frequency noise components created between the road surface and the tire, noise (undesired signal frequencies of 50 to 60Hz) produced by an electrical apparatus being generally usable at a specified frequency such as 50 Hz or 60 Hz, and/or high-frequency noise components produced by an electric motor mounted on a motor car. The band-pass filter is also effective to prevent the control unit 2 from malfunctioning due to undesired noise. In the previously-discussed embodiment, although a specified frequency range of 10 to 15 Hz is used as a definite band of the band-pass filter, a definite band of frequencies has to be determined depending on resonance-frequency characteristics of vertical oscillation of the unsprung mass of a vehicle.

As will be appreciated from the above, in the system of the invention, the operation of discrimination or determination of the road surface condition can be attained by integrating the amplitude (the maximum absolute value) of specified frequency components (reflecting fluctuations or variations in the state of the vehicle owing to input vibrations transmitted from the road surface to the road wheel during traveling) included in a signal from a wheel speed sensor, and by comparing the integrated value with a predetermined threshold value. Thus, the system can satisfactorily quickly detect the road surface condition even when the state or behavior of the vehicle varies owing to changes in the vehicle speed (or the wheel speed).

Returning to Fig. 1, there is shown a conceptual diagram of one embodiment of the road surface condition detection system made according to the invention. As seen in Fig. 1, the system comprises a wheel-speed detection means **a** provided for generating a wheel speed signal indicative of a wheel speed of at least one road wheel, an amplitude integration means **b** electrically connected to the wheel-speed detection means **a** for integrating an amplitude (the maximum absolute value) of resonance-frequency components (included in the wheel speed signal from the wheel-speed detection means) of vertical oscillation of the unsprung mass of the vehicle for a predetermined period of time to produce an integration signal value (Sa), and a road condition discrimination means **c** electrically connected to the amplitude integration means **b** for determining that the road surface condition is a bad road when the integration signal value (Sa) is above a predetermined threshold value ($\gamma$) and for determining that the road surface condition is a good road when the integration signal value (Sa) is below the predetermined threshold value ($\gamma$). Also, as seen in Fig. 1, if a band-pass filter **d** is further connected between the wheel-speed detection means **a** and the amplitude integration means **b**, the band-pass filter may act to uniformly transmit or extract resonance-frequency components such as 10 to 15 Hz of vertical oscillation of the unsprung mass within a definite band, while effectively removing noise components. Moreover, it is preferable that the above-noted predetermined time period necessary for integrating the amplitude of the resonance-frequency components, is set at a relatively short period equivalent to one revolution (360 degrees) of the road wheel. Such a properly shorter period for the operation of integration permits the system to quickly and precisely determine the road surface condition even during traveling under a particular road surface condition wherein a bad road surface and a good road surface alternate with each other at short intervals.

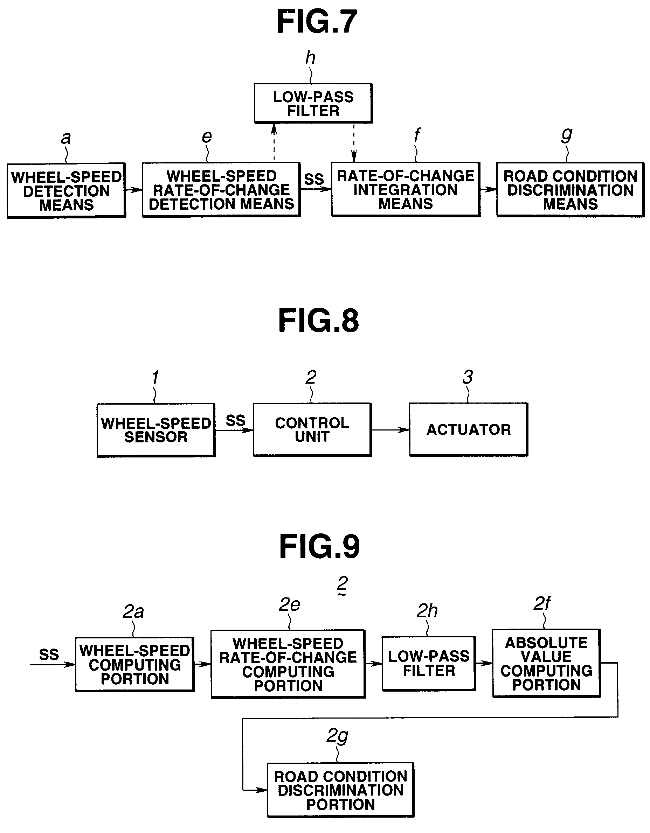

Referring now to Figs. 8 and 9, there are shown another exemplified road surface condition detection system. The system shown in Figs. 8 and 9 is similar to the system of Figs. 2 and 3. As seen in Fig. 8, the control unit 2 incorporated in this system is also connected between the wheel-speed sensor 1 (e.g., a typical magnetic pickup type wheel speed sensor) and the actuator 3 (e.g., an electromagnetic solenoid, an electric motor, a rotary solenoid or the like) of a control system such as a traction control system, a skid control system, a damping-force control system or the like. Thus, the same reference signs used to designate elements in the system shown in Fig. 3 will be applied to the corresponding elements used in the system shown in Fig. 9, for the purpose of comparison of the two different systems. The control unit incorporated in the system of Fig. 9 is different from that of Fig. 3, in that the operation of integration of the amplitude of resonance-frequency components of vertical oscillation of the unsprung mass is replaced by the operation of computation of the absolute value of the rate of change in wheel speed, and thus a low-pass filter is used in place of a band-pass filter.

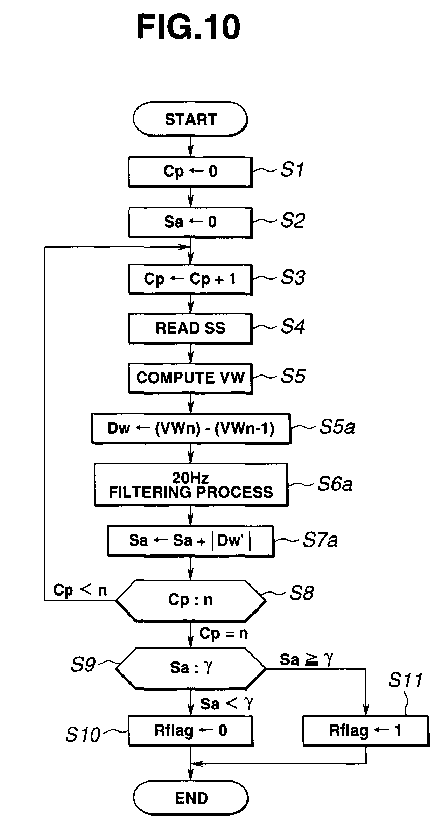

Referring to Fig. 9, the control unit 2 incorporated in the system of the other embodiment comprises a wheel-speed computing portion 2a, a wheel-speed rate-of-change computing portion 2e, a low-pass filter 2h, an absolute value/integration value computing portion (simply an absolute value computing portion) 2f and a road condition discrimination portion 2g. The routine for determination of a road surface condition, being executed by the processor of the control unit 2 of Fig. 9, is described in detail in accordance with the flow chart shown in Fig. 10. The routine of Fig. 10 is similar to that of Fig. 4, except that steps S6 and S7 included in the routine shown in Fig. 4 are replaced with steps S5a, S6a and S7a included in the routine shown in Fig. 10. Steps S5a, S6a and S7a will be hereinafter described in detail, while detailed description of steps S1 to S5, S8, S10 and S11 will be omitted because the above description thereon seems to be self-explanatory.

In step S5a, a rate-of-change $Dw$ (= $VW_n$ - $VW_{n-1}$) in the wheel speed is obtained by subtracting a previous value $VW_{n-1}$ of the wheel speed data from a current value $VW_n$, these wheel speed data being stored in the predetermined memory addresses of the memory.

In step S6a, a specified filtering process is made to the current rate-of-change $Dw$ obtained through the operation of subtraction ($VW_n$ - $VW_{n-1}$) at step S5a by means of a low-pass filter 2h, so as to pass or transmit frequency components below a given cut-off frequency such as 20 Hz. In step S7a, the absolute value $| Dw' |$ of the current rate-of-change $Dw'_{(n)}$ filtered through the low-pass filter 2h is calculated. At the same time, in step S7a, the integrated value Sa is updated by a new integrated value which is obtained by adding the absolute value $| Dw' |$ of the current rate-of-change $Dw'_{(n)}$ filtered to the previous integrated value $Sa_{(n-1)}$ stored in the predetermined memory address. The integration function ($Sa_{(n)} \leftarrow Sa_{(n-1)} + | Dw' |$) is performed by means of the absolute value/integration value computing portion 2f. In step S8, the "count" value Cp is compared with a predetermined number **n** for example one complete revolution (360 degrees) of the road wheel. When the predetermined number **n** is achieved, step S9 enter in which the integrated value Sa is compared with a predetermined threshold value $\gamma$. When step S9 determines that the integrated value Sa is less than the threshold value $\gamma$, step S10 proceeds in which the road condition indicative flag Rflag is reset. In contrast, when step S9 determines that the integrated value Sa is above the threshold $\gamma$, step S11 proceeds in which the road condition indicative flag Rflag is set.

Referring now to Figs. 11 and 12, there are shown test results of actual road tests which were experimentally assured by the inventor of the present invention, using a motor vehicle equipped with the road surface condition detection system of the embodiment shown in Figs. 8, 9 and 10. Fig. 11 shows the output data of the integrated values (or the integration signal values) Sa being plotted every one complete revolution of the road wheel during traveling on bad roads. On the other hand, Fig. 12 shows the output data of the integrated values Sa being plotted every one complete revolution of the road wheel during traveling on good roads. In comparison with variations in the integrated values Sa shown in Fig. 12 (during traveling on good roads), the integrated values Sa shown in Fig. 11 (during traveling on bad roads) greatly fluctuate and the variations in the integrated values Sa of Fig. 11 are relatively great so that some of the integrated values Sa are above the threshold $\gamma$. In contrast, during traveling on good roads (see Fig. 12), the integrated values Sa are comparatively stable and the variations in the integrated values Sa of Fig. 12 are small so that all of the integrated values Sa are less than the threshold $\gamma$. As set for above, the system of the other embodiment shown in Figs. 8, 9 and 10 can provide the same effects as the embodiment shown in Figs. 2, 3 and 4.

Although the systems of the previously-discussed two embodiments are designed to discriminate or determine the road surface condition every one complete revolution of the road wheel, the operation of determination of a road surface condition may be executed every two complete revolutions (corresponding to the number **2n** of pulses) of the road wheel or every 1/2 road-wheel revolution (180 degrees), i.e., the number **o.5n** of pulses.

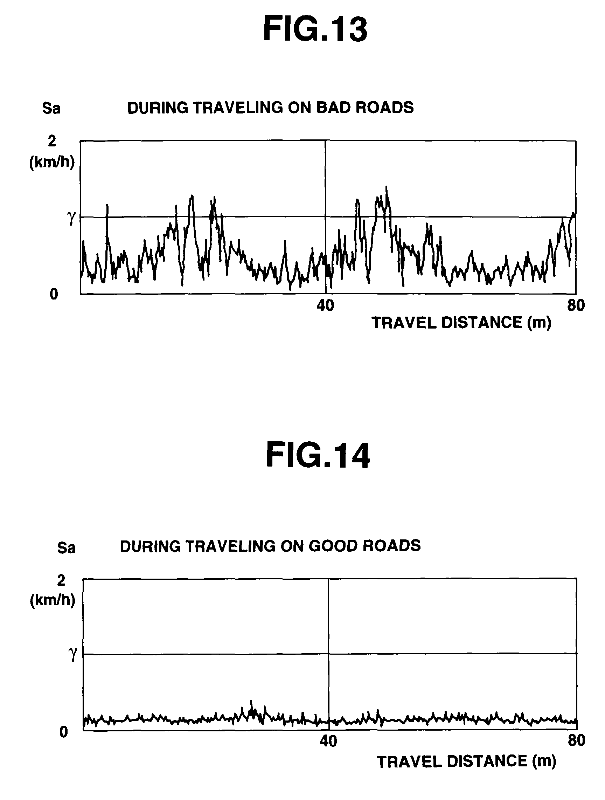

Alternatively, the predetermined number for the "count" value Cp may be arbitrarily set at a proper "count" value for example 10 counts, 20 counts, 50 counts or 100 counts, regardless of revolution speeds of the road wheel. The processor of the control unit determines the road surface condition by comparing the integrated value Sa with the predetermined threshold value $\gamma$ at the time when the predetermined number for the "count" value Cp is achieved. The predetermined number for the "count" value Cp can be replaced with a predetermined time period, such as 1 second or 2 seconds, measured from the beginning of the routine as shown in Figs. 4 or 10. In the event that the predetermined time period is set at an excessively short period of time, as can be appreciated from the graphs shown in Figs. 13 and 14, there is a possibility that the control system cannot response satisfactorily. Figs. 13 and 14 show test results of actual road tests which were experimentally assured by the inventor of the present invention, using a motor vehicle equipped with the road surface condition detection system of the embodiment shown in Figs. 8, 9 and 10. Fig. 13 shows the output data of the integrated values (or the integration signal values) Sa being plotted every 1/10 revolution of the road wheel during traveling on bad roads. On the other hand, Fig. 14 shows the output data of the integrated values Sa being plotted every 1/10 revolution of the road wheel during traveling on good roads. As appreciated from the superimposed pattern of the integrated value indicative output voltage signal data Sa shown particularly in Fig. 13, undesired noise components are superimposed into the test data. That is, the output signal data Sa tend to fluctuate greatly, in the case that the time period, necessary to achieve the operation of integration, is set at an excessively short time such as 1/10 revolution of the road wheel. In such a case, the results of determination of the road surface condition may frequently vary from a good road condition to a bad road condition or vice versa. This lowers the responsiveness of the control system. Thus, the predetermined time period for the operation of integration must be optimally determined in consideration of the responsiveness of the control system. In the embodiment shown in Figs. 8 to 10, the system uses the low-pass filter 2h. In the same manner as the band-pass filter 2d employed in the system shown in Figs. 2 to 4, the low-pass filter also serves as a noise attenuator being effective to attenuate several noises, particularly high-frequency noise components.

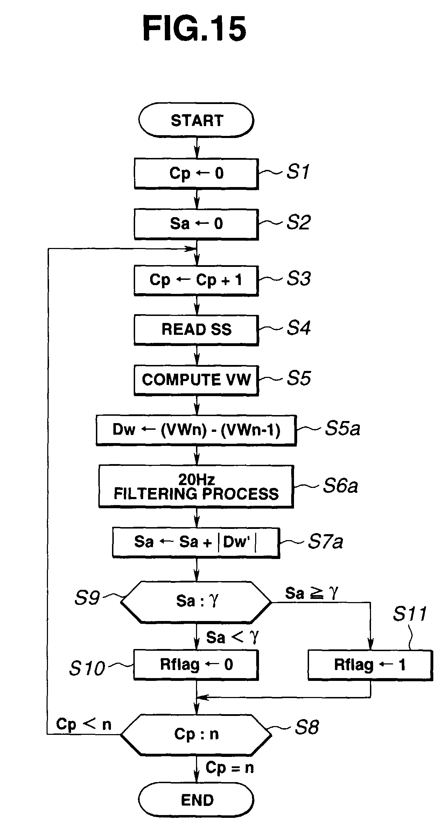

Referring now to Fig. 15, there is shown a modified arithmetic processing executed by the processor of the microcomputer employed in the controller 2. The modified routine shown in Fig. 15 is similar to the routine of Fig. 10, except that step S8 is executed after steps S10 or S11 in the modified routine of Fig. 15. Thus, the system equipped with the processor, which is capable of executing the modified routine of Fig. 15, may provide the same effects as the embodiments as discussed above.

Returning to Fig. 7, there is shown a conceptual diagram of another embodiment of the road surface condition detection system made according to the invention. The system comprises a wheel-speed detection means **a** provided for generating a wheel speed signal indicative of a wheel speed of at least one road wheel, a wheel-speed rate-of-change detection means **e** electrically connected to the wheel-speed detection means **a** for detecting a rate of change in the wheel speed signal from the wheel-speed detection means, a rate-of-change integration means **f** electrically connected to the wheel-speed rate-of-change detection means **e** for integrating the absolute value of the rate of change in the wheel speed signal for a predetermined period of time to produce an integration signal value (Sa), and a road condition discrimination means **g** electrically connected to the rate-of-change integration means **f** for determining that the road surface condition is a bad road when the integration signal value (Sa) is above a predetermined threshold value (γ) and for determining that the road surface condition is a good road when the integration signal value (Sa) is below the predetermined threshold value (γ). As seen in Fig. 7, if a low-pass filter **h** is further connected between the wheel-speed rate-of-change detection means **e** and the rate-of-change integration means **f**, the low-pass filter may act to transmit frequency components below a given cut-off frequency such as 20 Hz, while effectively attenuating the other frequency components (noises, i.e., frequency components higher than resonance-frequency components of vertical oscillation of the unsprung mass). Furthermore, it is preferable that the above-noted predetermined time period necessary for integrating the absolute value of the rate of change in the wheel speed signal, is set at a relatively short period equivalent to one revolution (360 degrees) of the road wheel, so as to permit the road surface condition detection system to quickly and precisely determine the road surface condition and to enhance the responsiveness of the control system.

While the foregoing is a description of the preferred embodiments carried out the invention, it will be understood that the invention is not limited to the particular embodiments shown and described herein, but that various changes and modifications may be made without departing from the scope or spirit of this invention as defined by the following claims.

**Claims**

1. A road surface condition detection system for an automotive vehicle, comprising:

   a wheel-speed detection means provided for detecting a wheel speed of at least one of a plurality of road wheels to generate a wheel speed signal;
   an integration means electrically connected to the wheel-speed detection means for integrating an absolute value of components, being included in said wheel speed signal from said wheel-speed detection means and representative of fluctuations in a state of the vehicle, for a predetermined period of time, to produce an integrated value (Sa); and
   a road condition discrimination means electrically connected to said integration means for determining that a road surface condition is a bad road when said integrated value is above a predetermined threshold value (γ) and for determining that the road surface condition is a good road when said integrated value is below said predetermined threshold value (γ).

2. A road surface condition detection system as claimed in claim 1, wherein said integration means computes said integrated value (Sa) by integrating an amplitude of resonance-frequency components of vertical oscillation of an unsprung mass of the vehicle for said predetermined period of time, said resonance-frequency components being included in said wheel speed signal.

3. A road surface condition detection system as claimed in claim 2, which further comprises a band-pass filter connected between said wheel-speed detection means and said integration means for extracting specified frequency components included in said wheel speed signal within a definite band, while attenuating all other frequency components, and for transmitting an output signal of said specified frequency components to said integration means.

4. A road surface condition detection system as claimed in claim 3, wherein said predetermined period of time is set at a time interval equivalent to one complete revolution of the road wheel.

5. A road surface condition detection system as claimed in claim 1, which further comprises a rate-of-change detection means electrically connected to said wheel-speed detection means for detecting a rate of change in said wheel speed signal, and wherein said integration means computes said integrated value (Sa) by integrating an absolute value of said rate of change in said wheel speed signal for said predetermined period of time.

6. A road surface condition detection system as claimed in claim 5, which further comprises a low-pass filter connected between said rate-of-change detection means and said integration means for transmit specified frequency components below a given cut-off frequency, while attenuating all other frequency components higher than resonance-frequency components of vertical oscillation of an unsprung mass of the vehicle, and for transmitting an output signal of said specified frequency components to said integration means.

7. A road surface condition detection system as claimed in claim 6, wherein said predetermined period of time is set at a time interval equivalent to one complete revolution of the road wheel.

# FIG.1

d

BAND-PASS
FILTER

a

b

c

WHEEL-SPEED
DETECTION
MEANS

SS

AMPLITUDE
INTEGRATION
MEANS

ROAD CONDITION
DISCRIMINATION
MEANS

# FIG.2

1

2

3

WHEEL-SPEED
SENSOR

SS

CONTROL
UNIT

ACTUATOR

# FIG.3

2

2a

2d

2b

2c

SS

WHEEL-SPEED
COMPUTING
PORTION

BAND-PASS
FILTER

AMPLITUDE
INTEGRATING
PORTION

ROAD CONDITION
DISCRIMINATION
PORTION

# FIG.4

```
        ┌─────────────┐
        │    START    │
        └──────┬──────┘
               │
        ┌──────▼──────┐
        │   Cp ← 0    │─── S1
        └──────┬──────┘
               │
        ┌──────▼──────┐
        │   Sa ← 0    │─── S2
        └──────┬──────┘
               │
        ┌──────▼──────┐
        │  Cp ← Cp+1  │─── S3
        └──────┬──────┘
               │
        ┌──────▼──────┐
        │   READ SS   │─── S4
        └──────┬──────┘
               │
        ┌──────▼──────┐
        │ COMPUTE VW  │─── S5
        └──────┬──────┘
               │
   ┌───────────▼───────────┐
   │  10~15Hz BAND-PASS     │─── S6
   │  FILTERING PROCESS     │
   └───────────┬───────────┘
               │
   ┌───────────▼───────────┐
   │      COMPUTE          │─── S7
   │ INTEGRATED VALUE Sa    │
   └───────────┬───────────┘
               │
 Cp < n   ╱────▼────╲
◄─────────  Cp : n   ─── S8
          ╲─────────╱
               │ Cp = n
               │
 S9   ╱────────▼────────╲   Sa ≧ γ
─────  Sa : γ            ─────────┐
      ╲─────────────────╱         │  S11
               │ Sa < γ           │
        ┌──────▼──────┐    ┌──────▼──────┐
 S10 ───│  Rflag ← 0  │    │  Rflag ← 1  │
        └──────┬──────┘    └──────┬──────┘
               │                  │
               │◄─────────────────┘
        ┌──────▼──────┐
        │     END     │
        └─────────────┘
```

# FIG.5

Sa

200
(km/h)

γ

0

40                    80

TRAVEL DISTANCE (m)

T

# FIG.6

Sa

200
(km/h)

γ

0

40                    80

TRAVEL DISTANCE (m)

# FIG.7

```
                                    ┌──────────────┐
                                    │   LOW-PASS   │  h
                                    │    FILTER    │
                                    └──────────────┘
                                        ▲      ┊
                                        ┊      ▼
┌──────────────┐  ┌──────────────────┐  ┌──────────────┐  ┌──────────────┐
│ WHEEL-SPEED  │  │   WHEEL-SPEED    │SS│RATE-OF-CHANGE│  │ROAD CONDITION│
│  DETECTION   │─▶│  RATE-OF-CHANGE  │─▶│ INTEGRATION  │─▶│DISCRIMINATION│
│    MEANS     │  │ DETECTION MEANS  │  │    MEANS     │  │    MEANS     │
└──────────────┘  └──────────────────┘  └──────────────┘  └──────────────┘
       a                  e                    f                 g
```

# FIG.8

```
┌──────────────┐      ┌──────────────┐      ┌──────────────┐
│ WHEEL-SPEED  │  SS  │   CONTROL    │      │   ACTUATOR   │
│    SENSOR    │─────▶│     UNIT     │─────▶│              │
└──────────────┘      └──────────────┘      └──────────────┘
       1                     2                     3
```

# FIG.9

```
                                            2
┌──────────────┐  ┌──────────────────┐  ┌──────────────┐  ┌──────────────┐
│ WHEEL-SPEED  │  │   WHEEL-SPEED    │  │              │  │   ABSOLUTE   │
│  COMPUTING   │─▶│  RATE-OF-CHANGE  │─▶│   LOW-PASS   │─▶│    VALUE     │
│   PORTION    │  │    COMPUTING     │  │    FILTER    │  │  COMPUTING   │
│              │  │     PORTION      │  │              │  │   PORTION    │
└──────────────┘  └──────────────────┘  └──────────────┘  └──────────────┘
      2a                  2e                  2h                 2f
SS ─▶

                  ┌──────────────────┐
                  │  ROAD CONDITION  │  2g
                  │  DISCRIMINATION  │
                  │     PORTION      │
                  └──────────────────┘
```

# FIG.10

```
                    ┌──────────┐
                    │  START   │
                    └────┬─────┘
                         │
                 ┌───────────────┐
                 │    Cp ← 0     │────── S1
                 └───────┬───────┘
                         │
                 ┌───────────────┐
                 │    Sa ← 0     │────── S2
                 └───────┬───────┘
                         │
                 ┌───────────────┐
           ┌────→│  Cp ← Cp + 1  │────── S3
           │     └───────┬───────┘
           │             │
           │     ┌───────────────┐
           │     │    READ SS    │────── S4
           │     └───────┬───────┘
           │             │
           │     ┌───────────────┐
           │     │  COMPUTE VW   │────── S5
           │     └───────┬───────┘
           │             │
           │     ┌───────────────────────┐
           │     │ Dw ← (VWn) - (VWn-1)  │────── S5a
           │     └───────┬───────────────┘
           │             │
           │     ┌───────────────────┐
           │     │       20Hz        │
           │     │ FILTERING PROCESS │────── S6a
           │     └───────┬───────────┘
           │             │
           │     ┌───────────────┐
           │     │ Sa ← Sa + |Dw'| │──── S7a
           │     └───────┬───────┘
    Cp < n │             │
           └─────────< Cp : n >────── S8
                         │ Cp = n
                         │
         S9 ───────< Sa : γ >──── Sa ≥ γ ──────┐
                         │ Sa < γ               │ S11
                 ┌───────────────┐      ┌───────────────┐
        S10 ─────│  Rflag ← 0    │      │  Rflag ← 1    │
                 └───────┬───────┘      └───────┬───────┘
                         │                      │
                         ├──────────────────────┘
                         │
                    ┌──────────┐
                    │   END    │
                    └──────────┘
```

# FIG.11

**DURING TRAVELING ON BAD ROADS**

# FIG.12

**DURING TRAVELING ON GOOD ROADS**

# FIG.13

DURING TRAVELING ON BAD ROADS

# FIG.14

DURING TRAVELING ON GOOD ROADS

# FIG.15

```
        START
          │
          ▼
      Cp ← 0        ～ S1
          │
          ▼
      Sa ← 0        ～ S2
          │
          ▼
    Cp ← Cp + 1     ～ S3
          │
          ▼
     READ SS        ～ S4
          │
          ▼
    COMPUTE VW      ～ S5
          │
          ▼
  Dw ← (VWn) - (VWn-1)   ～ S5a
          │
          ▼
       20Hz
  FILTERING PROCESS  ～ S6a
          │
          ▼
   Sa ← Sa + |Dw'|  ～ S7a
          │
          ▼
S9 ─┤   Sa : γ   ├─ Sa ≧ γ ──→   S11
          │                    Rflag ← 1
       Sa < γ
          ▼
S10 ── Rflag ← 0
          │
          ▼
 Cp < n ─┤  Cp : n  ├─ S8
          │
        Cp = n
          ▼
        END
```